# EUROPÄISCHE PATENTANMELDUNG

(11) **EP 1 151 911 A2**
(43) Veröffentlichungstag der Anmeldung: **07.11.2001**
(21) Anmeldenummer: 01110205.0
(22) Anmeldetag: 25.04.2001
(51) Int. Cl.: B62J 15/02

(54) **Befestigungseinrichtung für einen Radschützer**

(30) Priorität: 05.05.2000 DE 20008005 U
(71) Anmelder: sks metaplast Scheffer-Klute GmbH, 59846 Sundern (DE)
(72) Erfinder: Feldmann, Stefan, 59846 Sundern-Langscheid (DE)
(74) Vertreter: Harazim, Eugen, Dipl.-Phys.

(57) **Zusammenfassung**

Die vorliegende Erfindung betrifft eine Befestigungseinrichtung (1) zur Anbringung eines Radschützers (4) am Rahmen eines Fahrrads, mit drahtförmigen, radialen Streben (7), die mit ihrem inneren Ende am Rahmen anbringbar sind und in ihrem äußeren Endbereich jeweils in einem Klemmelement (2) festspannbar sind, das an einem Brückenteil (3) angebracht ist, welches mit dem Radschützer (4) verbindbar ist. Um eine verbesserte Funktionalität zu erreichen, schlägt die Erfindung vor, daß das Klemmelement (2) kappenförmig mit einer Einstecköffnung (6) ausgebildet ist, in die das äußere Ende der Strebe (7) einsteckbar ist, wobei im Bereich der Einstecköffnung (6) eine Spannzange (8) mit einer einsteckseitig aufsetzbaren Spannhülse (10) ausgebildet ist.

## Beschreibung

Die vorliegende Erfindung bezieht sich auf eine Befestigungseinrichtung zur Anbringung eines Radschützers am Rahmen eines Fahrrads, mit drahtförmigen, radialen Streben, die mit ihrem inneren Ende am Rahmen anbringbar sind und in ihrem äußeren Endbereich jeweils in einem Klemmelement festspannbar sind, das an einem Brückenteil angebracht ist, welches mit dem Radschützer verbindbar ist.

Radschützer für Fahrräder, häufig auch als Schutzbleche bezeichnet, bestehen aus einem im wesentlichen rinnenförmigen Kunststoff- oder Blechprofil, welches als gebogenes Formteil mit geringem radialen Abstand einen Teil des Radumfangs abdeckt. Zur Befestigung am Fahrradrahmen sind meist paarweise auf beiden Seiten des Rades angeordnete Streben vorgesehen. In der Regel handelt es sich dabei um Drahtstreben, die bezüglich der Radnabe im wesentlichen radial verlaufen und an ihrem inneren Ende im Bereich der Ausfallenden der Vordergabel bzw. Hintergabel mit dem Fahrradrahmen verbunden sind, beispielsweise durch Verschraubung. Im Bereich der äußeren Enden dieser Streben ist mit geeigneten Befestigungsmitteln der Radschützer gehaltert.

Um den radialen Abstand des Schutzblechs zum Außenumfang des Reifens einstellen zu können, beispielsweise zur Anpassung an unterschiedliche Reifengrößen oder bei geringfügig abweichenden Montagepunkten am Rahmen ist es bekannt, am seitlichen Rand des Radschützers Klemmelemente anzubringen in welche bei der Montage des Radschützers die äußeren Enden der Streben eingeschoben werden und die in der gewünschten Montageposition des Radschützers durch Betätigung des jeweiligen Klemmelemente fest auf der Strebe verspannt werden. Weit verbreitet sind beispielsweise seitlich über das Schutzblech vorstehende Klemmschrauben mit einer quer durchgehenden Klemmbohrung, durch welche die Enden der Streben hindurchgesteckt und darin festgeklemmt werden können. Eine weitere Möglichkeit zur Fixierung des Schutzblechs an den Streben ist in der DE 42 41 371 A1 beschrieben. Anstelle von Klemmschrauben sind dabei am Rand des Radschützers federbelastete, die Strebe lediglich reibschlüssig festlegende Klemmeinrichtungen angeordnet. Diese Ausführung hat den besonderen Vorteil, daß sie sich bei einem Unfall selbsttätig löst und damit einem Blockieren des Rades durch ein verkeiltes Schutzblech vorbeugt.

Nachteilig an den vorgenannten Ausführungsformen zur verstellbaren Anbringung eines Radschützers ist jedoch, daß die äußeren Enden der Streben über die Klemmeinrichtungen frei nach außen vorstehen. Diese stellen ein gewisses Verletzungsrisiko dar, auch wenn in der Regel auf die Drahtenden Schutzkappen aus Kunststoff oder Gummi aufgesteckt werden.

Es ist zwar bereits versucht worden, eine Art Schutzgehäuse von außen auf dem Radschützer anzubringen, um die Drahtenden abzudecken. Dieses System ist jedoch relativ montageunfreundlich. Außerdem stört das außen auf dem Radschützer angebrachte Schutzgehäuse nicht nur den optischen Gesamteindruck, sondern kann durch äußere mechanische Belastung, beispielsweise bei einem Sturz, abgerissen werden, so daß die Strebenenden frei hervortreten und dadurch ebenfalls zu Verletzungsgefahr führen können.

Angesichts der vorangehend erläuterten Problematik liegt der Erfindung die Aufgabenstellung zugrunde, eine Befestigungseinrichtung der eingangs genannten Art anzugeben, welche eine verbesserte Funktionalität hat, und zwar insbesondere im Hinblick auf die Verletzungssicherheit und Montagefreundlichkeit.

Zur Lösung dieser Aufgabenstellung schlägt die Erfindung ausgehend von dem eingangs geschilderten Stand der Technik vor, daß das Klemmelement kappenförmig mit einer Einstecköffnung ausgebildet ist, in die das äußere Ende der Strebe einsteckbar ist, wobei im Bereich der Einstecköffnung eine Spannzange mit einer einsteckseitig aufsetzbaren Spannhülse ausgebildet ist.

Bei der Erfindung hat ein Klemmelement nicht, wie in dem eingangs erwähnten Stand der Technik, eine Durchgangsbohrung, durch die das Ende der Strebe hindurchgesteckt wird, sondern bildet eine Kappe in Form einer einseitig geschlossenen Hülse, welche eine Einstecköffnung in Form einer Sackbohrung hat. Diese Ausführung hat den besonderen Vorteil, daß ein darin eingestecktes Ende einer Drahtstrebe grundsätzlich nicht nach außen über das geschlossene Ende der Kappe vorstehen kann und dadurch das Verletzungsrisiko deutlich verringert ist. Eine verbesserte Funktionalität im Hinblick auf die Sicherheit ergibt sich überdies daraus, daß selbst im ungünstigsten denkbaren Fall, beispielsweise wenn das Klemmelement nicht ordnungsgemäß verspannt ist und sich löst, die Drahtstrebe dennoch nicht nach außen aus dem Klemmelement hervortreten kann. Durch die äußere Formgebung kann deswegen das Verletzungsrisiko erheblich eingeschränkt werden.

Weitere funktionale Vorteile ergeben sich durch den in der erfindungsgemäßen Form angeordneten und ausgebildeten Klemmbzw. Spannmechanismus. Im einzelnen ist hierzu im Bereich der Einstecköffnung eine spannzangenartige Klemmhalterung für das Ende der Drahtstrebe vorgesehen. Diese zeichnet sich dadurch aus, daß durch Betätigung der Spannhülse die Einstecköffnung im Bereich der Spannzange radial zusammengepreßt, d. h. verengt wird, so daß die darin eingesetzte Drahtstrebe ähnlich einem Bohrwerkzeug im Bohrfutter einer Werkzeugmaschine oder dergleichen sicher gehaltert wird. Von Bedeutung ist dabei ebenfalls, daß die Spannhülse von der Einsteckseite her montiert wird. Für den Fall, daß sich die Spannhülse von der Spannzange löst, beispielsweise durch unsachgemäße Montage oder außergewöhnliche mechanische Belastung von außen, geht die Spannhülse nämlich nicht verloren, sondern gleitet allenfalls auf der Drahtstrebe entlang. Dank der kappenartig geschlossenen Ausführung des Klemmelements ist dabei sichergestellt, daß sich in diesem gelösten Zustand der Radschützer sich maximal so weit in Richtung auf das Rad verschiebt, bis das Strebenende in der Einstecköffnung anschlägt. Dadurch bietet die Erfindung erheblich größere Sicherheitsreserven, als die im Stand der Technik bekannten Ausführungen.

Durch die Länge der Spannzange bzw. der Einstecköffnung in dem Klemmelement kann der Verstellweg in den geforderten Grenzen vorgegeben werden. Dieser Verstellweg ist zum einen durch die maximale Eintauchtiefe des Strebenendes bis zum Grund der Einstecköffnung und auf der anderen Seite durch die minimale Eintauchtiefe, die für eine sichere Verspannung erforderlich ist, begrenzt.

Darüber hinaus ermöglicht die erfindungsgemäße Anordnung der Klemmelemente eine Anbringung an dem Radschützer in einer an sich bekannten Art und Weise mittels eines Brückenteils, welches nicht zusätzlich nach außen vorsteht und damit sowohl unter funktionalen als auch ästhetischen Gesichtspunkten vorteilhaft ist.

Vorzugsweise ist die Spannhülse als Steckhülse ausgebildet. Zur Montage wird diese lediglich axial auf die Spannzange aufgesteckt und in geeigneter Weise fixiert. Mit geeigneten Werkzeugen läßt sich eine derartige Preßverbindung mit geringerem Aufwand und schneller durchführen als beispielsweise eine Schraubverspannung.

Eine besonders bevorzugte Ausführungsform der Erfindung sieht vor, daß die Spannhülse ein Rastmittel aufweist, welches wahlweise in damit korrespondierende erste und zweite Rastaufnahmen in der Spannzange eintastbar ist, wobei das Klemmelement in der einen Rastposition gelöst und in der anderen Rastposition verspannt ist. Diese Rastmittel umfassen beispielsweise einen im Öffnungsquerschnitt der Spannhülse vorstehenden Vorsprung, der als Rastnocken dient, während die Rastaufnahmen durch im Außenumfang der Spannzange mit axialem Abstand voneinander angeordnete Vertiefungen gebildet werden.

In der ersten Rastposition ist die Spannhülse zwar durch den Eingriff des Rastmittels in der ersten Rastaufnahme bereits sicher an der Spannzange fixiert, diese wird jedoch noch nicht betätigt, d. h. nicht verspannt. Dieser Vormontage-Zustand ermöglicht ein einfaches Einsetzen des Strebenendes in die Einstecköffnung sowie eine Justierung des Klemmelements. Dadurch, daß die Spannhülse in diesem gelösten Zustand bereits eingerastet ist, wird die Handhabung bei der Einstellung und Justierung erleichtert, da die Spannhülse nicht manuell gegengehalten werden muß. Außerdem ergibt sich die besonders vorteilhafte Möglichkeit, die Befestigungseinrichtung mit einem derartig definiert vormontierten Klemmelement montagefertig auszuliefern, ohne daß separat lose Teile beigefügt werden müssen. Dadurch, daß in diesem vormontierten Zustand die Hülse eine definierte Vormontage-Rastpositon einnimmt, ist zudem sichergestellt, daß das Klemmelement auch tatsächlich entspannt und damit zum Einsetzen des Strebenendes vorbereitet ist. Im Gegensatz dazu ist beispielsweise bei Schraubklemmen oder dergleichen oft nicht eindeutig erkennbar, ob eine Überwurfmutter angezogen oder gelöst ist. Wenn nun die Strebe und das Klemmelement relativ zueinander eingestellt sind, wird die Spannhülse von Hand oder unter Benutzung eines geeigneten Werkzeugs axial auf die Spannzange aufgeschoben, bis das Rastmittel in die zweite Rastaufnahme eingreift, d. h. die zweite Rastposition erreicht ist. In dieser zweiten Rastposition ist die Spannzange des Klemmelements fest auf der Strebe verspannt. Von besonderem Vorteil ist hierbei wiederum, daß das Erreichen der definierten Rastposition eindeutig und sicher den verspannten Zustand anzeigt und nicht, wie beispielsweise bei Spannzangen mit aufgeschraubter Überwurfmutter bei der Montage auf die Verspannung mit einem vorgegebenen Nenndrehmoment geachtet werden müßte. Dadurch ergibt sich bei der Erfindung eine besonders hohe Montagefreundlichkeit und Funktionssicherheit bezüglich einer sicheren Fixierung des Radschützers.

Als Spannmechanismus, mit dem die axiale Verschiebung der Spannhülse in eine Betätigung der Spannzange umgesetzt wird, kann die Spannzange einen Außen-Klemmkonus und die Spannhülse einen damit korrespondierenden Innenkonus haben. Die vorangehend erläuterte erste und zweite Rastposition werden zur Realisierung der erfindungsgemäßen Funktion mit einem solchen axialen Abstand voneinander angeordnet, daß der Außen-Klemmkonus und der Innenkonus nur in der zweiten Rastposition axial zusammengeschoben sind.

Die Spannzange und gegebenenfalls auch die Spannhülse kann axial geschlitzt sein, um eine größere radiale Verformbarkeit vorzugeben.

Vorzugsweise ist die Einstecköffnung im Bereich der Spannzange quer zur Einsteckrichtung profiliert und die Strebe im Bereich ihres äußeren Endes dazu entgegengesetzt profiliert. Bei der Profilierung kann es sich um eine Verzahnung in Form einer Quer-Riffelung handeln, wobei die Profilierung der Strebe im wesentlichen dem Negativabdruck der Profilierung innerhalb der Spannzange bzw. umgekehrt entspricht, so daß beim Verspannen der Spannzange in Einsteckrichtung ein festsitzender Formschlußeingriff gebildet wird.

Sowohl die Spannzange als auch die Spannhülse sind bevorzugt als Kunststoff-Spritzgußteile ausgebildet.

Das Brückenteil ist vorzugsweise auf der Innenseite des Radschützers anbringbar. Diese Ausführung hat den funktionalen Vorteil, daß das Brückenteil gegen äußere Beanspruchung geschützt zwischen Radschützer und Rad untergebracht ist, und lediglich die erfindungsgemäßen Klemmelemente seitlich vom Schutzblech vorstehen. Außerdem wird durch diese Anordnung eine auf das Schutzblech von außen einwirkende Druckbelastung besser von den Streben abgefangen, und zwar insbesondere ohne daß eine aufwendige Befestigung erforderlich ist.

Eine besonders einfache und dennoch sichere Befestigung des Brückenteils an dem Radschützer sieht vor, daß das Brückenteil Formschlußausnehmungen aufweist, die mit dem Profil des Radschützers verrastbar sind. Wie eingangs erwähnt, haben Radschützer in der Regel ein rinnenförmiges Profil, wobei zumeist die Ränder durch angeformte Wulste mechanisch verstärkt sind. Dadurch, daß das Brückenteil die Ränder umgreift, kann eine Verrastung ohne zusätzliche Befestigungselemente realisiert werden. Insbesondere, wenn das Brückenteil auf der Innenseite des Radschützers montiert wird, ergibt sich auf diese Weise eine besonders montagefreundliche Anbringungsmöglichkeit, welche keine zusätzliche Fixierung erfordert. Eine Vernietung oder Verklebung könnte allenfalls als zusätzliche Sicherung vorgesehen werden.

Das Brückenteil ist ebenso wie die Spannzange vorzugsweise als Kunststoff-Spritzgußteil ausgebildet, wobei die Spannzangen der Klemmelemente paarweise einstückig angeformt sein können. Fertigungstechnisch hat dies den besonderen Vorteil, daß zur Befestigung eines Strebenpaars an einem Radschützer eine äußert geringe Anzahl von Einzelteilen erforderlich ist, nämlich lediglich das Brückenteil mit den angeformten Spannzangen sowie zwei Spannhülsen. Für die Montage eines Strebenpaars sind somit lediglich drei Kunststoff-Spritzgußteile erforderlich. Diese können in dem weiter oben erläuterten Vormontage-Zustand ausgeliefert werden, so daß sich die Montagearbeit beim Fahrradhersteller darauf beschränkt, die Streben in die Klemmelemente einzustecken und die Spannhülsen in der Endmontage-Position einzurasten.

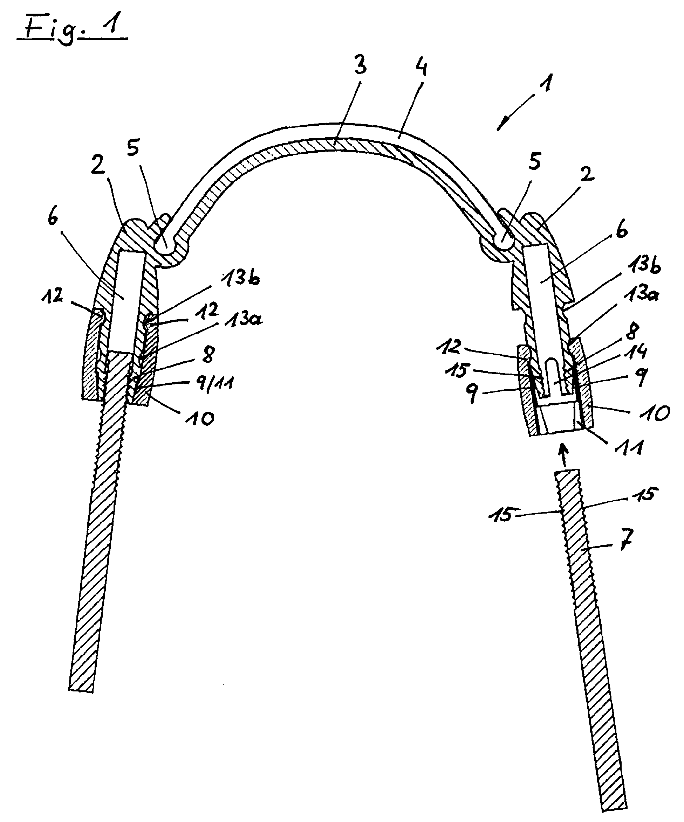

Im folgenden wird die Erfindung anhand eines praktischen Ausführungsbeispiels unter Bezugnahme auf die beigefügte Zeichnung näher erläutert. Im einzelnen zeigt
- Fig. 1: einen Querschnitt durch eine erfindungsgemäße Befestigungseinrichtung in montiertem und gelöstem Zustand.

In Fig. 1 ist eine erfindungsgemäße Befestigungseinrichtung im Querschnitt dargestellt und als Ganzes mit dem Bezugszeichen 1 versehen. Diese weist zwei erfindungsgemäße kappenförmige Klemmelemente 2 auf, die als einstückiges Kunststoff-Spritzgußteil über ein Brückenteil 3 miteinander verbunden sind. Dieses Brückenteil 3 ist bogenförmig in seiner Kontur dem rinnenförmigen Querschnitt eines Radschützers 4 angepaßt und hat seitliche Rastnuten 5, in welche die Ränder des Radschützers 4 eingreifen und für eine feste Verrastung der Befestigungseinrichtung 1 ohne zusätzliche Befestigungselemente sorgen.

Die Klemmelemente 2 weisen eine als Sackbohrung ausgebildete Einstecköffnung 6 auf. In diese Einstecköffnung 6 ist das äußere Ende einer Drahtstrebe 7 einsteckbar, wie dies auf der rechten Seite der Zeichnung vor der Montage und bei dem links dargestellten Klemmelement 2 nach erfolgter Montage erkennbar ist.

Im Bereich der Einstecköffnung 6 ist jedes Klemmelement 2 als Spannzange 8 mit einsteckseitig konisch zusammenlaufenden Außenkonus-Klemmflächen 9 geformt. Von der Einsteckseite ist jeweils eine Spannhülse 10 auf die Spannzange 8 aufsteckbar. Diese hat mit den vorgenannten Außenkonus-Klemmflächen 9 korrespondierende Innenkonus-Klemmflächen 11.

Die Spannhülse 10 weist nach innen vorstehende Rastnocken 12 auf. Diese können wahlweise in erste Rastvertiefungen 13a oder 13b in dem Klemmelement 2 im Bereich der Spannzange 8 eingreifen, wie dies in Fig. 1 entsprechend anhand des Klemmelements 2 auf der rechten bzw. linken Seite dargestellt ist.

Auf der Innenseite der Einstecköffnung 6 im Bereich der Spannzange 8, welche dort einen axialen Schlitz 14 aufweist, ist diese mit einer Profilierung in Form einer Quer-Riffelung 15 versehen. Eine entsprechende, ebenfalls mit dem Bezugszeichen 15 versehene Profilierung weist die Strebe 7 in ihrem äußeren Endbereich auf.

Das in Fig. 1 auf der rechten Seite dargestellte Klemmelement 2 zeigt den vormontierten Zustand. Darin ist die Spannhülse 10 so weit auf die Spannzange 8 aufgesteckt, daß die Rastnocken 12 in die erste Rastvertiefung 13a eingreifen. In diesem Vormontage-Zustand ist zwar die Spannhülse 10 sicher an dem Klemmelement 2 gehaltert, die Konusflächen 9 und 11 berühren sich jedoch nicht, so daß das äußere Ende der Strebe 7 einfach in die Einstecköffnung 6 eingesteckt und der Radschützer 4 samt der daran angebrachten Befestigungseinrichtung 1 relativ zum Rad justiert werden kann.

Sobald die gewünschte Einstellung erreicht ist, wird die Spannhülse 10 axial in Einsteckrichtung verschoben, bis der Rastnocken 12 in die zweite Rastvertiefung 13b in dem Klemmelement 2 einrastet, was in Fig. 1 anhand des Klemmelements 2 auf der linken Seite dargestellt ist. Durch die Innenkonus-Klemmflächen 11 werden die Außenkonus-Klemmflächen 9 so radial zusammengedrückt, daß die Spannzange 8 auf der Strebe 7 festgespannt wird. Dabei greifen die Profilierungen 15 in der Einstecköffnung 6 und auf der Strebe 7 ineinander ein, so daß bezüglich der Einsteckrichtung eine formschlüssige Fixierung erfolgt. Damit sind die Streben 7 sicher mit den Klemmelementen 2 der Befestigungseinrichtung 1 verbunden. Diese ist ihrerseits fest mit dem Radschützer 4 verbunden, so daß dieser sicher in Position gehalten wird.

## Patentansprüche

1. Befestigungseinrichtung zur Anbringung eines Radschützers am Rahmen eines Fahrrads, mit drahtförmigen, radialen Streben, die mit ihrem inneren Ende am Rahmen anbringbar sind und in ihrem äußeren Endbereich jeweils in einem Klemmelement festspannbar sind, das an einem Brückenteil angebracht ist, welches mit dem Radschützer verbindbar ist, **dadurch gekennzeichnet, daß** das Klemmelement (2) kappenförmig mit einer Einstecköffnung (6) ausgebildet ist, in die das äußere Ende der Strebe (7) einsteckbar ist, wobei im Bereich der Einstecköffnung (6) eine Spannzange (8) mit einer einsteckseitig aufsetzbaren Spannhülse (10) ausgebildet ist.

2. Befestigungseinrichtung nach Anspruch 1, **dadurch gekennzeichnet, daß** die Spannhülse (10) als Steckhülse ausgebildet ist.

3. Befestigungseinrichtung nach Anspruch 1 oder 2, **dadurch gekennzeichnet, daß** die Spannhülse (10) ein Rastmittel (12) aufweist, welches wahlweise in damit korrespondierende erste und zweite Rastaufnahmen (13a und 13b) einrastbar ist, wobei das Klemmelement (2) in der einen Rastposition gelöst und in der anderen Rastposition verspannt ist.

4. Befestigungseinrichtung nach Anspruch 3, **dadurch gekennzeichnet, daß** das Rastmittel durch einen in der Öffnung der Spannhülse (10) hervorstehenden Vorsprung (12) und die Rastaufnahmen durch im Außenumfang der Spannzange (8) mit axialem Abstand voneinander angeordnete Vertiefungen (13a und 13b) gebildet werden.

5. Befestigungseinrichtung nach einem der Ansprüche 1 bis 4, **dadurch gekennzeichnet, daß** die Spannzange (8) einen Außen-Klemmkonus (9) und die Spannhülse (10) einen damit korrespondierenden Innenkonus (11) hat.

6. Befestigungseinrichtung nach einem der Ansprüche 3 bis 5, **dadurch gekennzeichnet, daß** der Außen-Klemmkonus (9) und der Innenkonus (11) nur in der zweiten Rastposition axial zusammengeschoben sind.

7. Befestigungseinrichtung nach einem der Ansprüche 1 bis 6, **dadurch gekennzeichnet, daß** die Spannzange (8) axial geschlitzt ist.

8. Befestigungseinrichtung nach einem der Ansprüche 1 bis 7, **dadurch gekennzeichnet, daß** die Einstecköffnung (6) im Bereich der Spannzange (8) quer zur Einsteckrichtung profiliert ist, und die Strebe (7) im Bereich ihres äußeren Endes dazu entgegengesetzt profiliert ist.

9. Befestigungseinrichtung nach einem der Ansprüche 1 bis 8, **dadurch gekennzeichnet, daß** die Spannzange (8) und die Spannhülse (10) als Kunststoff-Spritzgußteile ausgebildet sind.

10. Befestigungseinrichtung nach einem der Ansprüche 1 bis 9, **dadurch gekennzeichnet, daß** das Brückenteil (3) auf der Innenseite des Radschützers (4) anbringbar ist.

11. Befestigungseinrichtung nach einem der Ansprüche 1 bis 10, **dadurch gekennzeichnet, daß** das Brückenteil (3) Formschlußausnehmungen (5) aufweist, die mit dem Profil des Radschützers (4) verrastbar sind.

12. Befestigungseinrichtung nach einem der Ansprüche 1 bis 11, **dadurch gekennzeichnet, daß** das Brückenteil (3) als Kunststoff-Spritzgußteil ausgebildet ist.

13. Befestigungseinrichtung nach einem der Ansprüche 1 bis 12, **dadurch gekennzeichnet, daß** an dem Brückenteil (3) paarweise die Klemmelemente (2) einstückig angeformt sind.
